# EUROPÄISCHE PATENTANMELDUNG

(11) **EP 2 905 880 A2**
(43) Veröffentlichungstag der Anmeldung: **12.08.2015**
(21) Anmeldenummer: 14195186.3
(22) Anmeldetag: 27.11.2014
(51) Int. Cl.: H02K 7/08, H02K 7/00

(54) **Elektromotorischer Antrieb**

(30) Priorität: 07.02.2014 DE 102014202279
(71) Anmelder: Bühler Motor GmbH, 90459 Nürnberg (DE)
(72) Erfinder: Strüber, Jürgen, 90451 Nürnberg (DE); Peterreins, Thomas, 90491 Nürnberg (DE)

(57) **Zusammenfassung**

Die Erfindung betrifft einen elektromotorischer Antrieb (1), umfassend einen Elektromotor (2), mit einem Stator (4), einem in zwei Lagern (6, 7) gelagerten Rotor (5) welcher eine Motorwelle (8) umfasst, die über eine Wellenkupplung (10) mit einer in zwei Lagern (19, 20) gelagerten Arbeitswelle (9) einer Arbeitsmaschine (3), insbesondere einer Pumpe, drehfest verbunden ist. Es ist Aufgabe der vorliegenden Erfindung für einen Ausgleich von Winkelfehlern und Konzentrizitätsfehlern zwischen Motor- und Arbeitswelle zu sorgen. Weiter soll ein möglichst großes Drehmoment bei kleinem Bauraum übertragbar sein und kein oder nur ein sehr kleines rotatorisches Spiel zwischen der Motorwelle und der Arbeitswelle vorhanden sein, um störende Geräusche und Verschleiß bei Drehmomentwechseln zu vermeiden. Weiter soll die Teileanzahl gering und die Montage einfach sein. Diese Aufgabe wird erfindungsgemäß durch das Kennzeichen des Anspruchs 1 gelöst.

## Beschreibung

Die Erfindung betrifft einen elektromotorischer Antrieb (1), umfassend einen Elektromotor (2), mit einem Stator (4), einem in zwei Lagern (6, 7) gelagerten Rotor (5) welcher eine Motorwelle (8) umfasst, die über eine Wellenkupplung (10) mit einer in zwei Lagern (19, 20) gelagerten Arbeitswelle (9) einer Arbeitsmaschine (3), insbesondere einer Pumpe, drehfest verbunden ist.

Aus logistischen Gründen werden Elektromotoren sowie daran angebaute Arbeitsmaschinen häufig getrennt voneinander hergestellt, z. B. von unterschiedlichen Herstellern. Aus technischen Gründen ist es dabei sinnvoll sowohl Elektromotoren als auch die Arbeitsmaschinen so auszuführen, dass Motorwelle und Arbeitswelle jeweils zweifach gelagert ausgeliefert werden. Dies führt jedoch toleranzbedingt zu mechanischen Ungenauigkeiten an der Schnittstelle zwischen Elektromotor und Arbeitsmaschine, insbesondere an einer Wellenkupplung.

Daher ist es Aufgabe der vorliegenden Erfindung für einen Ausgleich von Winkelfehlern und Konzentrizitätsfehlern zwischen Motor- und Arbeitswelle zu sorgen. Weiter soll ein möglichst großes Drehmoment bei kleinem Bauraum übertragbar sein und kein oder nur ein sehr kleines rotatorisches Spiel zwischen der Motorwelle und der Arbeitswelle vorhanden sein, um störende Geräusche und Verschleiß bei Drehmomentwechseln zu vermeiden. Weiter soll die Teileanzahl gering und die Montage einfach sein.

Diese Aufgabe wird erfindungsgemäß durch das Kennzeichen des Anspruchs 1 gelöst. Es ist vorgesehen, dass die Wellenkupplung die Übertragung von Drehmoment und Radialkraft sicherstellt, die Wellen zueinander zentriert, keine Axialkraft überträgt und durch Fertigungstoleranzen bedingte Winkelfehler der Wellen ausgleicht, wobei nur ein kleines Verkippen zugelassen wird und die Motorwelle im Kupplungsbereich über ein kupplungsnahes Kugellager axial gelagert ist, und der Außenring des kupplungsnahen Kugellagers radial zu einem Gehäuse nicht fixiert ist, so dass trotz zweimaliger Lagerung von Motorwelle und Abtriebswelle keine Überbestimmung vorliegt. Das kupplungsnahe Kugellager dient nicht als Radiallager und kann sich entsprechend eines sich toleranzbedingt ergebenden Achsversatzes ausrichten, wodurch eine statische Überbestimmung vermieden wird. Im Betrieb wirkt das kupplungsnahe Kugellager als reines Axiallager hinsichtlich Federvorspannung, Vibrationskräfte etc., kann aber als "normales" Radialrillenkugellager ausgeführt werden.

Weiterbildungen der Erfindung werden in den Unteransprüchen dargestellt. Es ist vorgesehen, dass zwischen dem Außenring des kupplungsnahen Kugellagers und einem kupplungsnahen Lagerschild in radialer Richtung ein Freiraum vorhanden ist. Dieser Freiraum gewährleistet die radiale Ausrichtbarkeit des kupplungsnahen Kugellagers gemäß des toleranzbedingt auftretenden Achsversatzes.

Dieser Freiraum zwischen dem kupplungsnahen Kugellager und dem kupplungsnahen Lagerschild kann als leerer Raum gestaltet sein. Dadurch wird während des Betriebs keine radiale Kraftkomponente auf das kupplungsnahe Kugellager ausgeübt. Dies verringert Verluste und verlängert die Lagerlebensdauer. Nachteil des leeren Zwischenraums ist eine gewisse Vibrationsneigung bei hoher Schwingungsbelastung. Weiter könnte es zu Montageproblemen führen, wenn die Radialausrichtung des kupplungsnahen Kugellagers in Grenzen undefiniert ist. Um diesen Nachteil so gering wie möglich zu halten sollte der Zwischenraum nur so groß gewählt werden, dass der toleranzbedinge Achsversatz gerade sicher ausgleichbar ist.

Um Vibrationen zu dämpfen und eine Vorzentrierung zu erreichen kann im Freiraum zwischen dem kupplungsnahen Kugellager und dem kupplungsnahen Lagerschild ein elastischer Ring angeordnet sein. Dieser verringert das Laufgeräusch und er erlaubt eine Radialverschiebung des kupplungsnahen Kugellagers um einen Achsversatz im Kupplungsbereich auszugleichen. Das Lager erfüllt hier zusammen mit dem elastischen Ring eine ausreichende Abstützung, so dass der Elektromotor ohne Arbeitsmaschine im Testbetrieb laufen kann. Der elastische Ring hat jedoch den Nachteil, dass durch ihn auch im Betrieb eine radiale Kraftkomponente auf das kupplungsnahe Kugellager wirkt. Dadurch können Verluste vergrößert und die Kugellagerlebensdauer verkürzt werden.

Um die Vorteile des leeren Freiraums mit den Vorteilen des elastischen Rings zu kombinieren und die jeweiligen Nachteile weitgehend zu vermeiden, wird vorgeschlagen, dass radial um den Außenring des kupplungsnahen Kugellagers ein Dämpfungselement oder ein Dämpfungsmaterial angeordnet ist, das vom Außenring des kupplungsnahen Kugellagers getragen wird. Diese Maßnahme dient einer verbesserten Vibrationsdämpfung. Wenn das Dämpfungselement oder Dämpfungsmaterial das kupplungsnahe Lagerschild radial nicht berührt oder die Lage des kupplungsnahen Kugellagers in radialer Richtung nicht beeinflusst wird auch vermieden, dass radiale Kraftkomponenten auf das kupplungsnahe Kugellager wirken.

Nach einer weiteren vorteilhaften Ausgestaltung der Erfindung ist vorgesehen dass das kupplungsnahe Kugellager zwischen einer motorwellenfesten Presshülse und einer sich am kupplungsnahen Lagerschild abstützenden Klemmscheibe axial spielfrei gehalten ist. Durch die Presshülse und die Klemmscheibe kann eine Spielfreiheit des kupplungsnahen Kugellagers hergestellt werden. Bei manchen Anwendungen ist die maximale Beschleunigungskraft durch Schockbelastung größer als eine Federvorspannkraft. Die Presshülse gewährleistet eine sichere Übertragung von Axialkräften von der Welle auf das kupplungsnahe Kugellager in einer Richtung. Die gesamte Anordnung baut sehr kompakt und erfordert nur wenige einfache Bauteile, die einfach zu montieren sind.

Die Wellenkupplung umfasst eine Passverzahnung, wodurch ein Drehspiel nahe Null möglich ist und Geräusche und Verschleiß bei häufigen Drehrichtungswechseln vermieden oder zumindest stark reduziert werden. Durch die Passverzahnung lässt sich ein großes Drehmoment übertragen. Weiter bewirkt die Passverzahnung im Betrieb einen Selbstzentrierungseffekt der beiden miteinander gekuppelten Wellen.

Es ist vorgesehen, dass die Passverzahnung flankenzentriert mit geringem Flankenspiel ausgebildet ist, wodurch auf eine zusätzliche Zentrierung verzichtet werden kann. Das geringe Flankenspiel verringert die Stoßbelastung bei Drehmomentumkehr. Zudem sind Radialkräfte in der Passverzahnung ausgeglichen wodurch die Belastung der Lager von Elektromotor und Arbeitsmaschine durch Radialkräfte verringert ist. Zweckmäßigerweise sollte dabei die Außenverzahnung der Passverzahnung geringfügig ballig ausgeführt sein. Dies ermöglicht einen geringen Winkelausgleich zwischen der Motorwelle und der Arbeitswelle. Bei kleineren Drehmomenten kann die Passverzahnung auch durch andere Verbindungen ersetzt werden, z.B. beidseitig Klauenkupplung mit dazwischen liegendem Gummikreuz.

Gemäß einer ersten Ausführungsform der Erfindung ist vorgesehen, dass das kupplungsnahe Kugellager axial nicht versetzt zur Passverzahnung angeordnet ist. Dabei ist entweder die Motorwelle mit einer Innenverzahnung und die Arbeitswelle mit einer Außenverzahnung versehen oder umgekehrt.

Um eine gute Konzentrizität zu erreichen ist eine Zentrierung zwischen der Motorwelle mit der Arbeitswelle vorgesehen. Diese ist bei der ersten Ausführungsform axial versetzt zur Passverzahnung angeordnet.

Zweckmäßigerweise ist die Zentrierung als enge, z. B. geschliffene Passung, ausgeführt. Dies sorgt für eine hohe Genauigkeit.

Ein Außenring des kupplungsnahen Kugellagers liegt an einem Absatz des kupplungsnahen Lagerschilds axial an.

Das kupplungsnahe Kugellager kann auch zwischen einer motorwellenfesten Presshülse und einem Absatz des kupplungsnahen Lagerschilds axial spielfrei gehalten sein (zeichnerisch nicht dargestellt).

Bei einer zweiten Ausführungsform der Erfindung ist vorgesehen, dass die Zentrierung der Motorwelle zur Arbeitswelle über einen Innenring des kupplungsnahen Kugellagers erfolgt. Hierdurch ist eine höhere Genauigkeit der Zentrierung von Motorwelle zur Arbeitswelle gegeben. Dadurch sind keine zusätzlichen Konstruktionselemente (z.B. Wellenabsätze) zur Zentrierung der Motorwelle zur Arbeitswelle erforderlich. Außerdem ist eine sehr genaue Zentrierung möglich, insbesondere weil Kugellager generell sehr präzise ausgeführt sind.

Bei der zweiten Ausführungsform ist es sinnvoll, dass das kupplungsnahe Kugellager axial versetzt zur Passverzahnung angeordnet ist, damit eine ausreichende Verzahnungslänge realisierbar ist.

Im Betrieb kann es zu Schockbelastungen kommen. Um dennoch Beschädigungen am Antrieb zu vermeiden ist vorgesehen, dass der Innenring des kupplungsnahen Kugellagers mit der Motorwelle eine Spielpassung bildet. Wird durch Schockbelastung die Federkraft überwunden, so kann bei einer Spielpassung die Motorwelle im kupplungsnahen Kugellager verrutschen, die Feder wird "platt gedrückt", entspannt sich nach dem Schock wieder und schiebt die Motorwelle zurück in ihre ursprünglichen Position.

Alternativ kann auch vorgesehen sein, dass der Innenring des kupplungsnahen Kugellagers mit der Motorwelle eine Presspassung bildet. Diese muss dann allerdings fest genug sein um auch im ungünstigsten Fall eine sichere feste Verbindung zu garantieren. Bei einem leichten Presssitz wäre nämlich mit einer bleibenden Verschiebung des kupplungsnahen Kugellagers auf der Motorwelle zu rechnen, weil die Federkraft einer Federscheibe für ein Zurückschieben des kupplungsnahen Kugellagers nicht ausreichen würde.

Grundsätzlich ist auch eine Durchmesserzentrierung in der Passverzahnung denkbar, wobei der Kopfkreisdurchmesser der Motorwelle mit dem Fußkreisdurchmesser der Arbeitswelle oder umgekehrt zusammenwirkt. Diese Lösung ist jedoch aufwändig in der Herstellung.

Weiter wird vorgeschlagen, dass der Außenring des kupplungsnahen Kugellagers axial nur einseitig festgelegt ist. Zudem ist eine Spielpassung zwischen kupplungsnahem Kugellager und Motorwelle vorgesehen.

Da die Motorwelle im Verzahnungsbereich eine relativ dünnwandige hohlzylindrische Form aufweist, kann die Formstabilität durch eine Presshülse gesteigert werden, wenn diese axial nicht versetzt zur Passverzahnung angeordnet ist. Außerdem wird die übertragbare Axialkraft von der Motorwelle zum kupplungsnahen Kugellager durch die Presshülse gesteigert.

Es hat sich gezeigt, dass das kupplungsferne Lager des Elektromotors wie üblich als Loslager mit Federschiebe ausgebildet sein kann.

Ausführungsbeispiele der Erfindung werden nachfolgend anhand der Zeichnung näher erläutert. Es zeigen:
Fig. 1 eine Prinzipskizze einer ersten Ausführungsform der Erfindung,
Fig. 2 eine Prinzipskizze einer zweiten Ausführungsform der Erfindung,
Fig. 3 eine Prinzipskizze zu einer ersten Stellung der Wellen zueinander,
Fig. 4 eine Prinzipskizze zu einer zweiten Stellung der Wellen zueinander,
Fig. 5 eine Prinzipskizze zu einer dritten Stellung der Wellen zueinander,
Fig. 6 eine Prinzipskizze des elektromotorischen Antriebs,
Fig. 7 eine Prinzipskizze einer Variante der ersten Ausführungsform,
Fig. 8 eine Prinzipskizze einer Variante der zweiten Ausführungsform und
Fig. 9 eine Prinzipskizze einer Variante des elektromotorischen Antriebs.

Hinweis: Bezugszeichen mit Apostroph und entsprechende Bezugszeichen ohne Apostroph bezeichnen namensgleiche Einzelheiten. Es handelt sich dabei um die Verwendung in einer anderen Ausführungsform und/oder die Einzelheit ist eine Variante. Die Bezugszeichenliste enthält der Einfachheit halber nur Bezugszeichen ohne Apostroph.

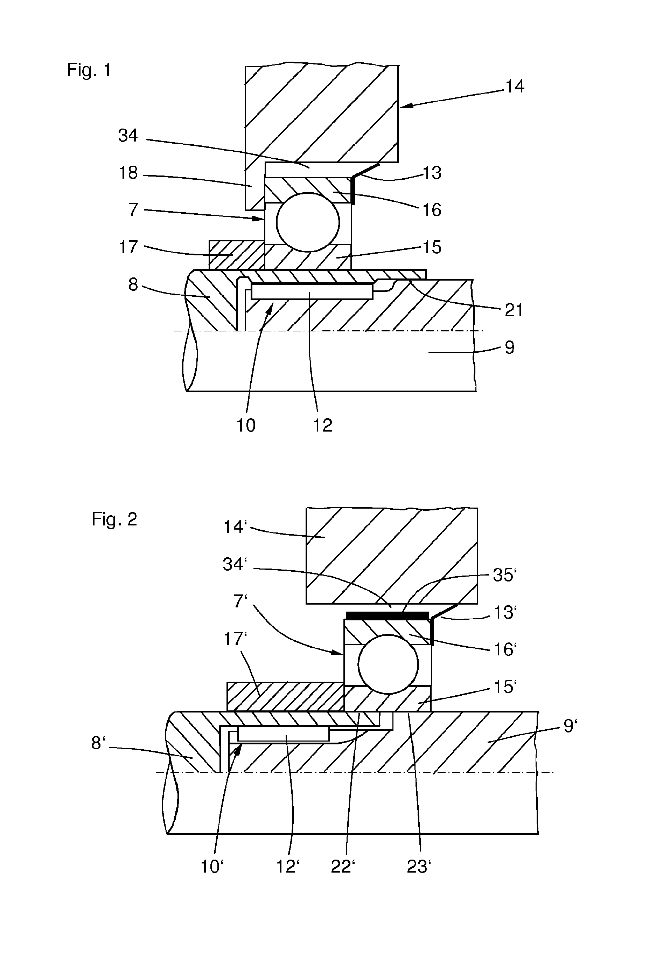

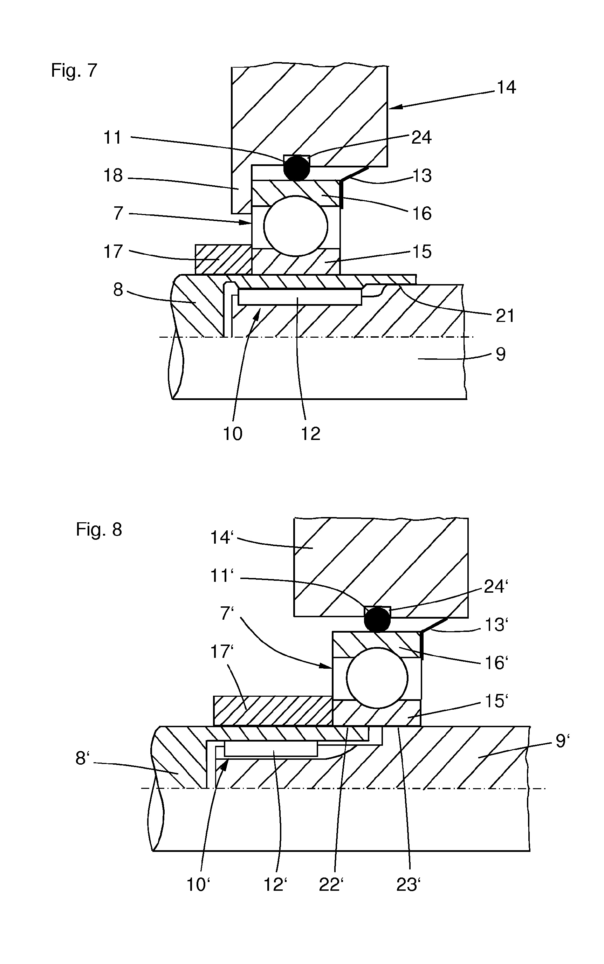

Die Fig. 1 und 7 zeigen eine Prinzipskizze einer ersten Ausführungsform der Erfindung, mit einer Motorwelle 8, einer Arbeitswelle 9, einem kupplungsnahen Lagerschild 14 mit einem Absatz 18, ein kupplungsnahes Kugellager 7, mit einem Innenring 15 und einem Außenring 16, einer Presshülse 17, einer Klemmscheibe 13 und einem Freiraum 34 der radial zwischen dem Außenring 16 und dem kupplungsnahen Lagerschild 14 angeordnet ist. Die Motorwelle 8 und die Arbeitswelle 9 sind über eine Wellenkupplung 10 in Form einer flankenzentrierten Passverzahnung 12 drehfest miteinander verbunden. Die Passverzahnung 12 ist axial nicht versetzt zum kupplungsnahen Kugellager 7 und zum kupplungsnahen Lagerschild 14 angeordnet. Axial versetzt zur Passverzahnung 12 ist eine Zentrierung 21 zwischen Motorwelle 8 und Arbeitswelle 9 dargestellt. Der Außenring 16 des kupplungsnahen Kugellagers 7 liegt motorseitig an einem Absatz 18 des kupplungsnahen Lagerschilds 14 an. Arbeitsmaschinenseitig wird das kupplungsnahe Kugellager 7 durch die Klemmscheibe 13 gehalten, welche sich an einem Innenumfang des kupplungsnahen Lagerschilds 14 festkrallt. Die Presshülse 17 ist auf der Motorwelle 8 festgepresst und bildet einen Anschlag für den Innenring des kupplungsnahen Kugellagers 7.

In Fig. 1 ist der Freiraum 34 zwischen dem Außenring 16 des kupplungsnahen Kugellagers 7 als leerer Raum dargestellt, der einen Axialversatz des kupplungsnahen Kugellagers 7 und damit der Motorwelle 8 erlaubt.

Fig. 7 zeigt weiter einen elastischen Ring 11, der in einer Nut 24 im kupplungsnahen Lagerschild 14 aufgenommen ist. Der elastische Ring 11 bildet eine radial nachgiebige Verbindung zwischen dem kupplungsnahen Kugellager 7 und dem kupplungsnahen Lagerschild 14.

Die Fig. 2 und 8 zeigen eine Prinzipskizze einer zweiten Ausführungsform der Erfindung, mit einer Motorwelle 8', einer Arbeitswelle 9', einem kupplungsnahen Lagerschild 14', ein kupplungsnahes Kugellager 7', mit einem Innenring 15' und einem Außenring 16', einer Presshülse 17', einer Klemmscheibe 13' und einem Freiraum 34' der radial zwischen dem Außenring 16' und dem kupplungsnahen Lagerschild 14' angeordnet ist. Die Motorwelle 8' und die Arbeitswelle 9' sind über eine Wellenkupplung 10' in Form einer flankenzentrierten Passverzahnung 12' drehfest miteinander verbunden. Die Passverzahnung 12' ist axial versetzt zum kupplungsnahen Kugellager 7' und zum kupplungsnahen Lagerschild 14' angeordnet. Axial versetzt zur Passverzahnung ist eine Zentrierung 22' zwischen Motorwelle 8' und dem Innenring 15' sowie eine Zentrierung 23' zwischen dem Innenring 15' und Arbeitswelle 9' dargestellt. Arbeitsmaschinenseitig wird das kupplungsnahe Kugellager 7' durch die Klemmscheibe 13' gehalten, welche sich an einem Innenumfang des kupplungsnahen Lagerschilds 14 festkrallt. Die Presshülse 17' ist auf der Motorwelle 8 festgepresst und bildet einen Anschlag für den Innenring 15' des kupplungsnahen Kugellagers 7'.

In Fig. 2 ist der Freiraum 34' zwischen dem Außenring 16' des kupplungsnahen Kugellagers 7' als teilweise leerer Raum dargestellt, der einen Axialversatz des kupplungsnahen Kugellagers 7' und damit der Motorwelle 8' erlaubt. Das kupplungsnahe Kugellager 7' trägt ein Dämpfungselement 35', das keine Verbindung mit dem kupplungsnahen Lagerschild 14' aufweist. Es könnte sich auch um ein Dämpfungsmittel, wie einem Dämpfungsfett handeln. Das Dämpfungselement 35' bewirkt ohne die Bewegungsfreiheit des kupplungsnahen Kugellagers 7' in radialer Richtung einzuschränken eine Vibrationsdämpfung des Antriebs.

Fig. 8 zeigt weiter einen elastischen Ring 11', der in einer Nut 24' im kupplungsnahen Lagerschild 14' aufgenommen ist. Der elastische Ring 11' bildet eine radial nachgiebige Verbindung zwischen dem kupplungsnahen Kugellager 7' und dem kupplungsnahen Lagerschild 14'.

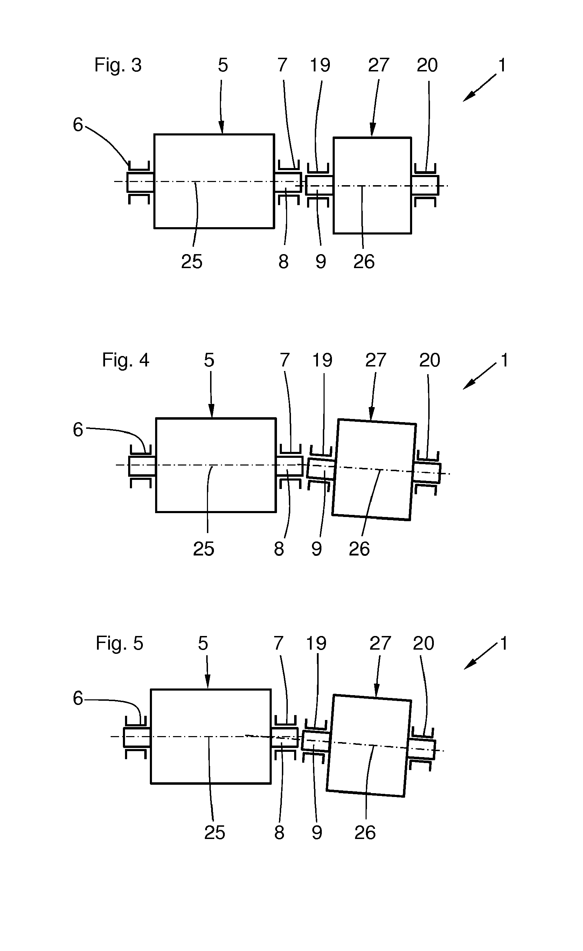

Die Fig. 3 bis 5 zeigen Prinzipskizzen zu möglichen Stellungen einer Motorwelle 8 zu einer Arbeitswelle 9 eines Antriebs 1, mit einer Motorachse 25, einer Arbeitsachse 26, einem Rotor 5 eines Elektromotors, einem Arbeitsrotor 27, einem kupplungsfernen ersten Lager 6 und einem kupplungsnahen zweiten Lager 7 für die Motorwelle 8 und einem dritten Lager 19 und einem vierten Lager 20 für die Arbeitswelle 9.

Fig. 3 zeigt eine erste Stellung, bei der die Motorwelle 8 gegenüber der Arbeitswelle 9 axial versetzt ist, wobei aber beide Wellen parallel zueinander verlaufen.

Fig. 4 zeigt eine zweite Stellung, bei der die Motorwelle 8 gegenüber der Arbeitswelle 9 um einem Winkel verdreht ist, wobei sich die Motorachse 25 mit der Arbeitsachse 26 in einem Kupplungsbereich zwischen den beiden Lagern 7 und 19 schneidet.

Fig. 5 zeigt eine dritte Stellung, welche eine Kombination zwischen den Fig. 3 und 4 darstellt, wobei sowohl ein Achsversatz sowie ein Winkelversatz zwischen der Motorwelle 8 und der Arbeitswelle 9 vorliegt, wodurch normalerweise die Achsen zueinander windschief liegen.

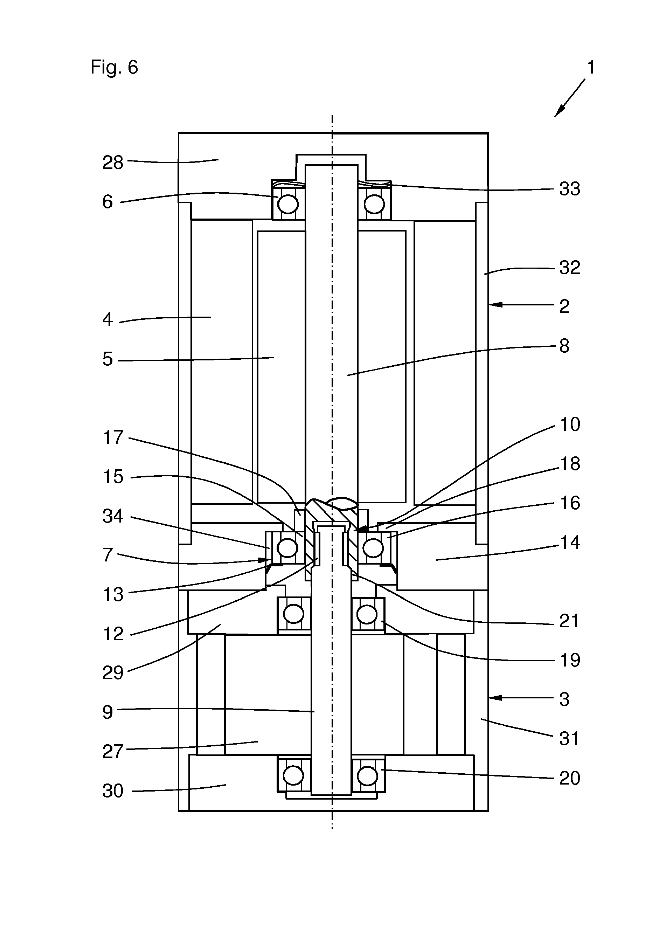

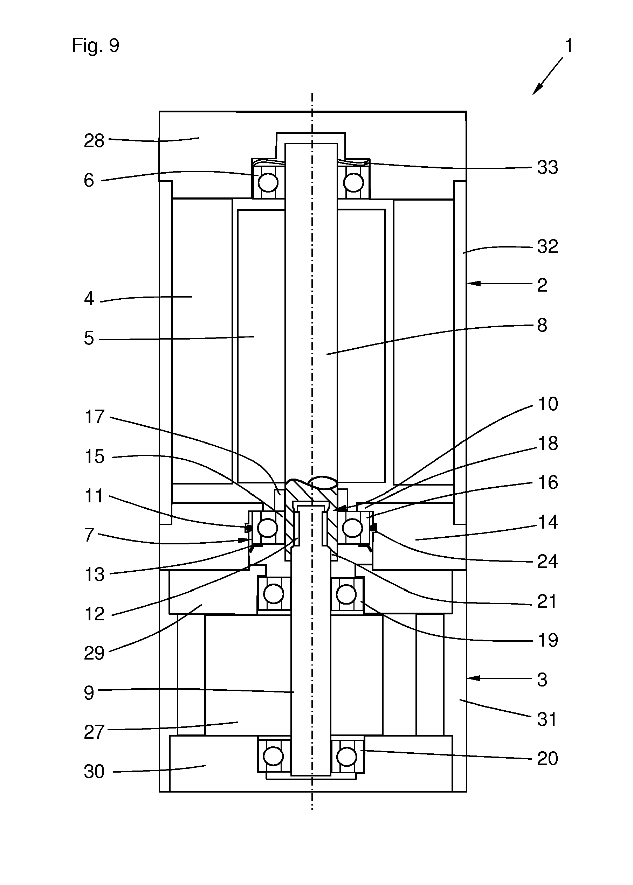

Die Fig. 6 und 9 zeigen eine Prinzipskizze des elektromotorischen Antriebs 1 gemäß der ersten Ausführungsform aus Fig. 1, mit einem Elektromotor 2 und einer daran befestigten und gekuppelten Arbeitsmaschine 3. Der Elektromotor weist ein Motorgehäuse 32, einen Motorgehäusedeckel 28, einen Stator 4, einen Rotor 5, die Motorwelle 8, ein kupplungsfernes Lager 6, das kupplungsnahe Kugellager 7 mit dem Innenring 15 und dem Außenring 16, die Presshülse 17, den Freiraum 34, die Klemmscheibe 13, das kupplungsnahe Lagerschild 14 und dem Absatz 18 und eine Federscheibe 33 am kupplungsfernen Lager 6 auf. Die Arbeitsmaschine 3 weist ein Arbeitsgehäuse 31, einen Arbeitsgehäusedeckel 30 ein Arbeitslagerschild 29, die Arbeitswelle 9, einen Arbeitsrotor 27, ein drittes Lager 19 und ein viertes Lager 20 auf. Die Motorwelle 8 und die Arbeitswelle 9 sind über eine Wellenkupplung 10 in Form einer Passverzahnung 12 miteinander drehfest gekuppelt. Die Arbeitsmaschine ist im vorliegenden Beispiel eine Ölpumpe in Form einer Gerotorpumpe. Der Elektromotor ist als elektronisch kommutierter Gleichstrommotor ausgebildet.

In Fig. 9 ist zusätzlich im Freiraum und in einer Nut 24 im kupplungsnahen Lagerschild 14 ein elastischer Ring 11 angeordnet, der eine elastische Verbindung zwischen dem Außenring 16 des kupplungsnahen Kugellagers 7 und dem kupplungsnahen Lagerschild 14 bildet.

### Bezugszeichenliste

| | | | |
|---|---|---|---|
| 1 | Antrieb | 29 | Arbeitslagerschild |
| 2 | Elektromotor | 30 | Arbeitsgehäusedeckel |
| 3 | Arbeitsmaschine | 31 | Arbeitsgehäuse |
| 4 | Stator | 32 | Motorgehäuse |
| 5 | Rotor | 33 | Federscheibe |
| 6 | kupplungsfernes Kugellager | 34 | Freiraum |
| 7 | kupplungsnahes Kugellager | 35 | Dämpfungselement |
| 8 | Motorwelle | | |
| 9 | Arbeitswelle | | |
| 10 | Wellenkupplung | | |
| 11 | elastischer Ring | | |
| 12 | Passverzahnung | | |
| 13 | Klemmscheibe | | |
| 14 | kupplungsnahes Lagerschild | | |
| 15 | Innenring | | |
| 16 | Außenring | | |
| 17 | Presshülse | | |
| 18 | Absatz | | |
| 19 | drittes Lager | | |
| 20 | viertes Lager | | |
| 21 | Zentrierung | | |
| 22 | Zentrierung | | |
| 23 | Zentrierung | | |
| 24 | Nut | | |
| 25 | Motordrehachse | | |
| 26 | Arbeitsdrehachse | | |
| 27 | Arbeitsrotor | | |
| 28 | Motorgehäusedeckel | | |

## Patentansprüche

1. Elektromotorischer Antrieb (1), umfassend einen Elektromotor (2), mit einem Stator (4), einem in zwei Lagern (6, 7) gelagerten Rotor (5) welcher eine Motorwelle (8) umfasst, die über eine Wellenkupplung (10) mit einer in zwei Lagern (19, 20) gelagerten Arbeitswelle (9) einer Arbeitsmaschine (3), insbesondere einer Pumpe, drehfest verbunden ist, **dadurch gekennzeichnet, dass** die Wellenkupplung (10) die Übertragung von Drehmoment und Radialkraft sicherstellt, die Wellen zueinander zentriert, keine Axialkraft überträgt und durch Fertigungstoleranzen bedingte Winkelfehler der Wellen ausgleicht (kleines Verkippen zulässt) und die Motorwelle (8) über ein kupplungsnahes Kugellager (7) axial gelagert ist, und der Außenring des kupplungsnahen Kugellagers (7) radial zu einem kupplungsnahen Lagerschild (14) nicht fixiert ist, so dass trotz zweimaliger Lagerung von Motorwelle und Abtriebswelle keine Überbestimmung vorliegt.

2. Antrieb nach Anspruch 1, **dadurch gekennzeichnet, dass** zwischen dem Außenring (16) des kupplungsnahen Kugellagers (7) und einem kupplungsnahen Lagerschild (14) in radialer Richtung ein Freiraum (34) vorhanden ist.

3. Antrieb nach Anspruch 2, **dadurch gekennzeichnet, dass** der Freiraum (34) zwischen dem kupplungsnahen Kugellager (7) und dem kupplungsnahen Lagerschild (14) leer ist.

4. Antrieb nach Anspruch 2, **dadurch gekennzeichnet,** das im Freiraum (34) zwischen dem kupplungsnahen Kugellager (7) und dem kupplungsnahen Lagerschild (14) ein elastischer Ring (11) angeordnet ist.

5. Antrieb nach Anspruch 2, **dadurch gekennzeichnet, dass** radial um den Außenring (16) des kupplungsnahen Kugellagers (7) ein Dämpfungselement oder ein Dämpfungsmaterial angeordnet ist, dass vom Außenring (16) des kupplungsnahen Kugellagers (7) getragen wird.

6. Antrieb nach Anspruch 5, **dadurch gekennzeichnet, dass** das Dämpfungselement oder Dämpfungsmaterial das kupplungsnahe Lagerschild (14) radial nicht berührt oder die Lage des kupplungsnahen Kugellagers (7) in radialer Richtung nicht beeinflusst.

7. Antrieb nach zumindest einem der Ansprüche 1 bis 6, **dadurch gekennzeichnet, dass** das kupplungsnahe Kugellager (7) zwischen einer motorwellenfesten Presshülse (17) und einer sich am kupplungsnahen Lagerschild (14) abstützenden Klemmscheibe (13) axial spielfrei gehalten ist.

8. Antrieb nach zumindest einem der Ansprüche 1 bis 7, **dadurch gekennzeichnet, dass** die Wellenkupplung (10) eine Passverzahnung (12) umfasst.

9. Antrieb nach Anspruch 8, **dadurch gekennzeichnet, dass** die Passverzahnung (12) flankenzentriert mit geringem Flankenspiel oder durchmesserzentriert ausgebildet ist.

10. Antrieb nach Anspruch 8 oder 9, **dadurch gekennzeichnet, dass** die Außenverzahnung der Passverzahnung (12) geringfügig ballig ausgeführt ist.

11. Antrieb nach Anspruch 8, 9 oder 10, **dadurch gekennzeichnet, dass** das kupplungsnahe Kugellager (7) axial nicht versetzt zur Passverzahnung (12) angeordnet ist.

12. Antrieb nach Anspruch 8, 9 oder 10, **dadurch gekennzeichnet, dass** die Zentrierung (21) der Motorwelle (8) mit der Arbeitswelle (9) axial versetzt zur Passverzahnung angeordnet ist.

13. Antrieb nach Anspruch 12, **dadurch gekennzeichnet, dass** die Zentrierung (21) über eine enge Passung erfolgt.

14. Antrieb nach zumindest einem der vorangehenden Ansprüche, **dadurch gekennzeichnet, dass** ein Außenring (16) des kupplungsnahen Kugellagers (7) an einem Absatz (18) des kupplungsnahen Lagerschilds (14) axial anliegt.

15. Antrieb nach Anspruch 14, **dadurch gekennzeichnet, dass** das kupplungsnahe Kugellager (7) zwischen einer motorwellenfesten Presshülse (17) und einem Absatz des kupplungsnahen Lagerschilds (14) axial spielfrei gehalten ist.

16. Antrieb nach zumindest einem der vorangehenden Ansprüche, **dadurch gekennzeichnet, dass** die Zentrierung (22) der Motorwelle (8) zur Arbeitswelle (9) über einen Innenring (15) des kupplungsnahen Kugellagers (7) erfolgt, indem der Innenring des kupplungsnahen Kugellagers teilweise auf der Motorwelle (8) und teilweise auf der Arbeitswelle (9) sitzt.

17. Antrieb nach zumindest einem der Ansprüche 8 bis 10 und 12 bis 16, **dadurch gekennzeichnet, dass** das kupplungsnahe Kugellager (7) axial versetzt zur Passverzahnung (12) angeordnet ist.

18. Antrieb nach zumindest einem der vorangehenden Ansprüche, **dadurch gekennzeichnet, dass** der Innenring (15) des kupplungsnahen Kugellagers (7) mit der Motorwelle (8) eine Spielpassung bildet.

19. Antrieb nach zumindest einem der vorangehenden Ansprüche, **dadurch gekennzeichnet, dass** der Innenring (15) des kupplungsnahen Kugellagers (7) mit der Motorwelle (8) feste Presspassung bildet.

20. Antrieb nach zumindest einem der vorangehenden Ansprüche, **dadurch gekennzeichnet, dass** der Außenring (16) des kupplungsnahen Kugellagers (7) axial nur einseitig festgelegt ist.

21. Antrieb nach zumindest einem der vorangehenden Ansprüche, **dadurch gekennzeichnet, dass** die Presshülse (17) axial nicht versetzt zur Passverzahnung (12) angeordnet ist.

22. Antrieb nach zumindest einem der vorangehenden Ansprüche, **dadurch gekennzeichnet, dass** kupplungsferne Kugellager (6) des Elektromotors (2) als Loslager mit Federscheibe ausgebildet ist.
